# EUROPÄISCHE PATENTSCHRIFT

(11) **EP 2 396 154 B1**
(45) Veröffentlichungstag und Bekanntmachung des Hinweises auf die Patenterteilung: **07.01.2015**
(21) Anmeldenummer: 10723916.2
(22) Anmeldetag: 30.04.2010
(51) Int. Cl.: B27N 1/00

(54) **HOLZWERKSTOFFPRODUKT UND VERFAHREN ZU DESSEN HERSTELLUNG**
WOOD MATERIAL PRODUCT AND METHOD FOR THE PRODUCTION THEREOF
MATÉRIAU À BASE DE BOIS ET PROCÉDÉ POUR SA FABRICATION

(30) Priorität: 28.05.2009 DE 102009023643
(43) Veröffentlichungstag der Anmeldung: 21.12.2011
(73) Patentinhaber: Fraunhofer-Gesellschaft zur Förderung der angewandten Forschung e.V., 80686 München (DE)
(72) Erfinder: GUNSCHERA, Jan, 38536 Meinersen-Päse (DE); THOLE, Volker, 38102 Braunschweig (DE); MARKEWITZ, Doreen, 38106 Brauschschweig (DE); BOKELMANN, Katrin, 97084 Würzburg (DE); SELVAM, Thangaraj, 90408 Nürnberg (DE); HALBHUBER, Annett, 91443 Scheinfeld (DE)
(74) Vertreter: Stornebel, Kai
(86) Internationale Anmeldenummer: PCT/EP2010/002651
(87) Internationale Veröffentlichungsnummer: WO 2010/136106

(56) Entgegenhaltungen:
- DE-A1- 3 943 488
- JP-A- 10 286 807
- JP-A- 2003 025 310
- JP-A- 2003 245 910

## Beschreibung

Es betrifft ein Verfahren gemäß Anspruch 1 zum Herstellen von Holzwerkstoffprodukten aus lignocelulosehaltigen Partikeln und formaldehydhaltigen Klebstoffen, die miteinander vermischt und nach dem Vermischen einem Formgebungsverfahren zugeführt werden. Die Erfindung betrifft ebenfalls ein Holzwerkstoffprodukt gemäß Anspruch 9 als solches.

Holzwerkstoffe sind eine Gruppe von Werkstoffen, die aus zerkleinerten Holzteilen unter Zugabe von Klebestoffen gebildet werden. Die Holzteile werden gezielt durch Maschinen mit schneidenden oder nicht schneidenden Wirkorganen hergestellt. Die Maschinen mit schneidenden Wirkorganen sind beispielsweise Zerspaner, die mit nicht schneidenen Wirkorgangen beispielsweise Mühlen. Ebenfalls können Koppelprodukte aus der Holzbearbeitung oder Holzverarbeitung verwendet werden. Neben den verschiedenen Holzrohstoffen lassen sich zur Herstellung der Holzwerkstoffe auch andere ein- und mehrjährige Pflanzen verwenden. Die Verfahren zur Herstellung der zerkleinerten Holzteile oder Teile ein- und mehrjähriger Pflanzen, die sogenannten lignocellulosehaltigen Partikel, sowie die erforderlichen Trennprozesse zur Abscheidung unerwünschter Bestandteile lassen sich je Pflanzentyp auswählen.

Die Zugabe des Klebstoffes oder der Klebstoffe erfolgt entweder nach der Trocknung der Partikel oder, wie bei der Herstellung spezieller Faserplatten, z. B. MDF, unmittelbar nach der Faserherstellung vor der Trocknung der Partikel. Das aus den klebstoffbehafteten Partikeln oder Fasern gebildete Vlies wird mittels einer Heißpresse auf die gewünschte Sollrohdichte verpresst. Durch den Wärmeeintrag der Heißpresse erfolgt eine Aushärtung des Klebstoffes. Im Ergebnis entsteht dadurch ein fester Verbundwerkstoff mit einer für den jeweiligen Anwendungsbereich ausreichenden, mechanischen Stabilität und Feuchtebeständigkeit.

Ein bedeutendes Einsatzgebiet der Holzwerkstoffe sind Holzwerkstoffplatten, die in großen Mengen hergestellt werden. Anwendungsbereiche für Holzwerkstoffplatten sind vor allem der Möbelbau und das Bauwesen. Neben einer Plattenpresse können Holzwerkstoffe auch in andere Formen gebracht werden, sofern dies gewünscht wird.

Als Klebstoff oder Bindemittel lassen sich grundsätzlich alle klebenden und bindenden organischen und anorganischen Stoffe einsetzen. Die Rohstoffe für die organischen Klebstoffe basieren nahezu ausschließlich auf petrochemischen Ressourcen. Klebstoffe auf pflanzlicher oder tierischer Basis konnten bislang keine nennenswerte industrielle Bedeutung erlangen, lediglich Klebstoffe mit dem natürlichen Polyphenol "Tannin" konnten im industriellen Umfang eingesetzt werden. Pflanzliche Kohlenhydrate sowie tierische und pflanzliche Einweißstoffe sind zwar grundsätzlich geeignet, bei der Holzwerkstoffherstellung verwendet zu werden, werden industriell jedoch aufgrund der mangelnden Feuchtebeständigkeit, des relativ hohen Preises und der langen Prozesszeiten lediglich als Beimischung verwendet.

Wirtschaftlich bedeutsam sind daher Amino- und Phenoplaste sowie polymeres Methylmethandiisocyanat (pMDI). Der wichtigste Klebstoff in der Holzwerkstoffindustrie ist der Harnstoff-Formaldehyd-Klebstoff (UF-Klebstoff) zusammen mit dem Melamin-Harnstoff-Formaldehyd-Klebstoff (MUF-Klebstoff). Werden besondere Anforderungen an die Feuchtebeständigkeit der Platten gestellt, werden Phenol-Formaldehyd-Klebstoff (PF-Klebstoff) sowie das PMDI bevorzugt.

Die feuchtebeständigeren Klebstoffe sind deutlich teurer als die UF-Klebstoffe, so dass häufig auch Abmischungen dieser Klebstoffe eingesetzt werden. Ferner sind feuchtebeständigere Verklebungen durch eine Kombination aus UF-Klebstoff und MUF-Klebstoff realisierbar. Die Vorteile des UF-Klebstoffes bestehen vor allem in der leicht durchführbaren chemischen Reaktion und in den kostengünstigen Rohstoffen. Darüber hinaus ist der ausgehärtete Klebstoff vergleichsweise temperaturbeständig und zeigt sehr gute Haftungseigenschaften auf Holzoberflächen.

Die Amino- und Phenoplaste erhärten durch eine Kondensationsreaktion. Die Nachteile dieser Klebstoffe bestehen darin, dass bei der Kondensationsreaktion ein Überschuss an Formaldehyd notwendig ist, dass nicht der gesamte Formaldehyd eingebunden wird und durch eine hydrolytische Spaltung des Klebstoffes freier Formaldehyd gebildet wird. Durch diese Mechanismen kommt es zu einer unerwünschten Emission von Formaldehyd aus den fertigen Holzwerkstoffen. Ferner bestehen relativ strenge Reglungen, die den zulässigen maximalen Gehalt an freiem Formaldehyd in dem Holzwerkstoff begrenzen bzw. die zulässigen Emissionen an Formaldehyd festlegen.

Aus dem Stand der Technik sind verschiedene Methoden bekannt, um die Formaldehydemission aus Holzwerkstoffen zu verringern. Neben einer Verringerung des Molverhältnisses von Formaldehyd zum Harnstoff, der Substitution des Formaldehyds sowie der Modifizierung des Formaldehyds besteht die Möglichkeit, den Formaldehyd bei der Erhärtung zu binden.

Beispielsweise besteht die Möglichkeit, Formaldehyd zumindest teilweise durch eine andere Substanz, wie zum Beispiel Glyoxal, zu ersetzen um so den Gehalt an freiem Formaldehyd zu reduzieren. Weiterhin wird versucht, Harnstoff-Formaldehyd-Klebstoffe mit organischen Funktionalitäten zu modifizieren oder der Klebstoffflotte bzw. den Fügeteilchen Substanzen hinzuzufügen, die den freien Formaldehyd binden.

In der DE 19704525 A1 ist ein Verfahren zur Herstellung von Formaldehyd armen Holzspan- und Faserplatten bekannt. Nach der Herstellung der Platten werden diese mit kondensierten Tanninen als Formaldhydfänger behandelt. Es ist außerdem möglich, die Herstellungsbedingungen zu ändern, z. B. durch spezielle Techniken der Kondensation und Nachbehandlung der Holzwerkstoffe, damit der Formaldehyd schneller aus den Materialien entweicht.

Diese Verfahren haben jedoch Nachteile, beispielsweise dahingehend, dass die mechanischen und hygrischen Eigenschaften, z. B. Biegefestigkeit und Wasserbeständigkeit der Werkstoffe, durch die Modifizierung bzw. Zugabe von Absorbern nachteilig verändert werden. Die zugesetzten Substanzen können eine Veränderung der Reaktivität bewirken, was eine wirtschaftlich ungünstige Verlängerung der üblichen Presszeiten zur Folge hat. Darüber hinaus besteht die Gefahr, dass die erzielten Effekte nur kurzfristig wirksam sind, so dass die Emissionen nach einer bestimmten Zeit das gleiche Niveau wie ohne Maßnahmen erreichen. Die zusätzlich zugeführten Substanzen können selber nicht feuchtebeständig sein. Bei einer entsprechenden Beanspruchung und bei entsprechenden Einsatzbedingungen können sich die Substanzen daher auf der Plattenoberfläche anlagern und in die Umgebung gelangen.

Die JP 10085585 A1 beschreibt eine Substanz zur Reinigung von Raumluft von flüchtigen organischen Schadstoffen, die aus Zeolithen, Aluminiumoxid, Kieselgur oder Silica-Gel besteht und Aminogruppen auf der Materialoberfläche trägt, wodurch insbesondere die Adsorption von Formaldehyd gesteigert wird. Darüber hinaus ist es aus dem Stand der Technik bekannt, dass die Zeolithe Calcium-, Natrium- und Manganionen enthalten. Flüchtige organische Schadstoffe (VOC) werden an diesem Material adsorbiert und katalytisch zersetzt.

Die JP 2003-245910 A1 beschreibt gemäß dem Oberbegriff des Anspruchs 1 eine Holzfaserplatte zum Einsatz im Hausbau oder zur Möbelherstellung. Um die Geruchsbelastung bei Faserplatten zu verringern, ist ein Zeolith in der Faserplatte vorgesehen, um die Emissionen zu verringern. Zeolith wird in einer Mischeinrichtung den Holzfasern zugegeben, an denen bereits Klebstoffe anhaften. Alternativ dazu können die Zeolithe den Klebstoffen beigemengt werden, bevor diese den Holzfasern zugeführt werden.

Ausgehend von diesem Stand der Technik liegt der Erfindung die Aufgabe zugrunde ein Verfahren zur Herstellung von Holzfaserstoffen sowie Holzwerkstoffprodukte bereitzustellen, die dauerhaft eine geringere Formaldehydabgabe aufweisen.

Erfindungsgemäß wird diese Aufgabe durch ein Verfahren mit den Merkmalen gemäß dem kennzeichnenden teil des Hauptanspruchs 1 sowie durch ein Holzwerkstoffprodukt mit den Merkmalen des nebengeordneten Anspruchs gelöst. Vorteilhafte Ausgestaltungen und Weiterbildungen der Erfindung sind in den Unteransprüchen aufgeführt.

Das erfindungsgemäße Verfahren zum Herstellen von Holzwerkstoffprodukten aus lignocellulosehaltigen Partikeln und formaldehydhaltigen Klebstoffen, die miteinander vermischt und nach dem Vermischen einem Formgebungsverfah ren zugeführt werden, wobei ein Zeolith mit den lignocellulosehaltigen Partikeln vermischt wird, bevor der Klebstoff zugegeben wird, sieht vor, dass dem Zeolith und/oder den lignocellulosehaltigen Partikeln Haftmittel die von dem Klebstoff, mit dem die Matrix für das Holzwerkstoffprodukt erzeugt wird, verschieden sind, zur besseren Anhaftung des Zeoliths an den lignocellulosehaltigen Partikeln vor dem Vermischen der lignocellulosehaltigen Partikel und der formaldehyd-haltigen Klebstoffe zugegeben werden. Durch die Anordnung eines Zeolithes in dem Holzwerkstoffprodukt ist es möglich, eine dauerhafte Bindung oder einen katalytischen Abbau des freien oder freiwerdenden Formaldehyds in einem Holzwerkstoff zu bewirken. In dem Gemisch aus lignocellulosehaltigen Partikeln und Klebstoff wird der Zeolith eingebettet und dauerhaft festgehalten, sodass über einen langen Zeitraum die Adsorption des freiwerdenden Formaldehyds oder katalytische Zersetzung des Formaldehyds bewirkt werden kann. Aufgrund der Möglichkeit, dass Formaldehyd einerseits an den auf der Zeolithoberfläche befindlichen Aminogruppen kovalent gebunden und andererseits das Formaldehydmolekül aufgrund der großen inneren Oberfläche des Zeolithen auch in den Poren adsorbiert werden kann, ist eine vergrößerte Adsorptionskapazität gegenüber Systemen vorhanden, bei denen nur einer der beiden vorbeschriebenen Mechanismen auftritt. Die Erfindung sieht vor, dass der Zeolith mit den lignocellulosehaltigen Partikeln und Haftmittel vermischt wird, bevor der Klebstoff zugegeben wird, anschließend werden der Klebstoff und ggf. weitere Komponenten dem Gemisch aus Zeolith und lignocellulosehaltigen Partikeln und Haftmittel zugegeben. Ein solches Vorgehen ist insbesondere dann möglich, wenn nur geringe Mengen an Zeolith zugegeben werden, da bei relativ geringen Mengen eine Entmischung weniger wahrscheinlich ist. Sind höhere Zugabemengen an Zeolith notwendig, kann es zu einer Trennung oder einer nicht ausreichenden Durchmischung zwischen den Zeolithen und den Partikeln kommen. In diesen Fällen ist es besonders zweckmäßig, den Zeolith auf der Spanoberfläche zu binden. Zur Bindung wird Haftmittel den lignocellulosehaltigen Partikeln und/oder dem Zeolith zugegeben, damit die Zeolithe besser an den Spänen haften. Zur Bindung lassen sich die zur Hydrophobierung üblichen Paraffine oder zusätzliche Paraffine mit einer besonders hohen Klebeneigung verwenden.

Aufgrund der hohen Effektivität des Zeolithen im Hinblick auf die Adsorption von Formaldehyd oder katalytische Zersetzung ist bevorzugt vorgesehen, dass der Zeolithanteil bezogen auf die Trockenmasse der lignocellulosehaltigen Partikel zwischen 0,5 und 10 Massenprozent vorzugsweise zwischen 2 und 6 Massenprozent eingestellt wird. Aufgrund der geringen eingesetzten Menge an Zeolithen bleiben die mechanischen und chemischen Eigenschaften des Holzwerkstoffes nahezu unverändert. Die Untersuchung der Formaldehydaufnahme des Zeoliths in einem Kammerversuch ergab, dass eine Verringerung der Formaldehydmenge auf 60 % bis 20 % der Ausgangsmenge erreicht werden konnte. Bei gleicher Verwendung eines speziell modifizierten Zeoliths wurde sogar eine Verringerung auf weniger als 20 % der Ausgangsmenge erzielt. In beiden Fällen wurden die mechanischen oder hygrischen Eigenschaften des Holzwerkstoffes nicht negativ beeinflusst.

Als lignocellulosehaltige Partikel können neben Fasern und Spänen auch organische Nichtholzpartikel aus ein- oder mehrjährigen Pflanzen verwendet werden.

Ebenfalls ist es möglich, dass nur ein Teil der für das Verfahren eingesetzten lignocellulosehaltigen Partikeln mit dem Zeolith vermischt wird und die fehlenden Komponenten in einem separaten Mischprozess zugegeben werden. Die Teilmenge die lignocellulosehaltigen Partikel und der Zeolith werden beispielsweise mit einem Klebstoffanteil vermischt und ausgehärtet, so dass eine dauerhafte Bindung des Zeoliths mit den Partikeln erzielt wird. Anschließend werden solcherart konditionierte Partikel anderen lignocellulosehaltigen Partikeln, die nicht mit einem Zeolith verbunden sind, zugegeben, mit einem Klebstoff vermischt und anschließend in einem formgebenden Verfahren weiter verarbeitet. Es ist durchaus möglich, dass Partikel mit Zeolithanbindung nur schicht- oder bereichsweise in dem Endprodukt angeordnet sind.

Die Haftung mittels Paraffin wird erreicht, indem die lignocellulosehaltigen Partikel zunächst mit dem Paraffin fein verteilt vermischt werden und anschließend eine Zugabe des Zeoliths ebenfalls in einem Mischvorgang erfolgt. Ebenfalls ist es möglich, den Zeolith und die lignocellulosehaltigen Partikel zunächst zu mischen und anschließend Paraffin zuzugeben. Ebenfalls ist die gleichzeitige Zugabe aller Komponenten in einen Mischer möglich.

Eine Haftung des Zeoliths kann auch erhalten werden, wenn ein Klebstoff verwendet wird. Bei dem Klebstoff handelt es sich um einen anderen als den zur Herstellung des Holzwerkstoffproduktes verwendeten Klebstoff. Die Mischreihenfolgen lassen sich der gleichen Weise variieren wie bei der Verwendung von Paraffin.

Auch ist es möglich, einen Teil des von dem formaldehydhaltigen Klebstoff verschiedenen Klebstoffes mit einem Teil oder mit sämtlichen lignocellulosehaltigen Partikeln zu vermischen und die Mischung vor einer weiteren Komponentenzugabe durch Zuführung von thermischer Energie auszuhärten. Die Zeolithe sind dann besonders fest auf den Oberflächen der lignocellulosehaltigen Partikel gebunden. Anschließend werden die übrigen Komponenten des Holzwerkstoffproduktes zugeführt und endverarbeitet.

Ein Holzwerkstoffprodukt, das aus mehreren Schichten besteht, muss nicht in allen Schichten Zeolithe oder gleiche Zeolitheanteile enthalten. Es ist ebenfalls vorgesehen, dass sich Zeolithanteile in den Deckschichten und der Mittelschicht voneinander unterscheiden. Auch ist ein Holzwerkstoffprodukt vorgesehen, das eine Zwischenschicht mit einer Zeolithkomponente enthält, beispielsweise zwischen einer üblichen Deckschicht und der Mittelschicht. Bei diesem Aufbau würde eine Zwischenschicht den wesentlichen oder gesamten Zeolithanteil enthalten.

Der Zeolith kann als Pulver oder Suspension zugegeben werden, vorteilhafterweise wird als Zeolith Zeolith Beta, Clinopthilolith und/oder Zeolith Y verwendet, ebenfalls kann ergänzend oder alternativ modifizierter Zeolith Y verwendet werden. Es kann ebenfalls vorgesehen sein, dass als Zeolith modifizierte, aktiv katalytisch wirkende Zeolithe des Typs Y verwendet werden, die Formaldehyd spalten.

Aufgrund der hohen thermischen und chemischen Stabilität der Zeolithe werden diese während des Herstellungsprozesses des Holzwerkstoffproduktes nicht beschädigt, ebenfalls werden ihre Adsorptionseigenschaften nicht beeinträchtigt. Darüber hinaus ist es vorteilhaft, dass sich der Zeolith als sehr feines Pulver herstellen lässt. Dadurch kann es als Adsorbermaterial fein verteilt zugefügt werden, ohne dass die Werkstoffeigenschaften des Holzwerkstoffproduktes negativ beeinträchtigt werden. Dadurch wird gleichzeitig gewährleistet, dass der Formaldehyd direkt an der Quelle der Emission adsorbiert wird und nicht aus dem Holzwerkstoffprodukt austritt.

Das erfindungsgemäße Holzwerkstoffprodukt mit einem Gemisch aus lignocellulosehaltigen Partikeln und einem formaldehydhaltigen Klebstoff sieht vor, dass das Holzwerkstoffprodukt ein Zeolith enthält. Der Zeolith ist an den lignocellulosehaltigen Partikeln über ein Haftvermittler, der von dem Klebstoff, mit dem die Matrix für das Holzwerkstoffprodukt erzeugt wird, verschieden ist angebunden, beispielsweise über Paraffin der ver schieden zu dem Klebstoff ist, mit dem die Matrix für das Holzwerkstoffprodukt erzeugt wird. Der Zeolithanteil kann je nach Produkteigenschaften schwanken, vorzugsweise ist ein Zeolithanteil zwischen 0,5 und 10 Massenprozent, vorzugsweise 2 und 6 Massenprozent des Anteils der lignocellulosehaltigen Partikeln an der Gesamtmasse des Holzwerkstoffproduktes vorgesehen.

Der Zeolith kann nur schichtweise oder bereichsweise in dem Holzwerkstoffprodukt angeordnet sein, vorzugsweise in einer Zwischenschicht oder in einer Außenschicht. Der Zeolithanteil in den einzelnen Bereichen oder Schichten kann unterschiedlich sein, um an Stellen besonders hoher Formaldehydabgabe ein besonders hohes Adsorptionsvermögen bereitstellen zu können.

Es ist vorteilhaft, dass der Zeolith in vielfältiger Form modifizierbar ist. Wird zum Beispiel ein Zeolith Y mit einem Si/Al-Verhältnis von 40 mit hydrophoben Eigenschaften verwendet, wird sich dies auf die Adsorption von Formaldehyd positiv auswirken. Der Zeolith besitzt beispielsweise einen Porendurchmesser von 7,4 Å, der groß genug für die Aufnahme der Formaldehydmoleküle ist. Zur zusätzlichen Verbesserung der Formaldhydaufnahme wird der Zeolith mit Aminopropylgruppen oberflächenmodifiziert. Die Oberflächenmodifizierung des Zeolithen kann auf verschiedene Weise erzielt werden. Beispielsweise können 100 g Zeolithpulver mit 44 g 3-Aminopropylthriethoxysilan in 725 g Chloroform über Nacht bei Raumtemperatur gerührt werden. Der Zeolith wird abfiltriert, mit Chloroform gewaschen und bei ca. 90 °C für ca. 2 Stunden getrocknet. Das Verhältnis von modifizierten Si04-Einheiten zu unmodifizierten Si/AlO4-Enheiten beträgt 1:6,6. Zur Modifizierung sind auch andere Lösemittel geeignet. Werden 500 mg Zeolithpulver mit 2,2 g 3-Aminopropylthriethoxysilan in 18 g Cyclohexan bzw. Toluol bzw. Methyltert-Butylether (MTBE) über Nacht bei Raumtemperatur gerührt und der so behandelte Zeolith abfiltriert, mit dem entsprechenden Lösungsmittel gewaschen und bei 90 °C für ca. 1 h getrocknet, ergeben sich Verhältnisse von modifizierten SiO4-Einheiten zu unmodifizierten Si/AlO4-Einheiten von 1:6,0 (Cyclohexan) und 1:7,0 (MTBE).

Bekannt sind auch Modifizierungen ohne Lösemittel. Die Verhältnisse von modifizierten SiO4-Einheiten zu unmodifizierten Si/AlO4-Einheiten betragen 1:15.0, wenn unter Luftatmosphäre auf 0.11 g Zeolithpulver 0,56 g 3-Aminopropylthrietoxysilan gegeben werden, und 1:3,6, wenn unter Argonatmosphäre auf 1 g Zeolithpulver 0,72 g Aminopropylthriethoxsilan gegeben werden.

### Anwendungsbeispiel

Bei der Herstellung einer Spanplatte wird nach Mischung der Komponenten Fichtenspäne und Harnstoff-Formaldehyd-Klebstoff die Mischung geteilt. Ein Teil der Mischung wird mit 4 % (bezogen auf trockene Spanmasse) des mit Aminopropylgruppen modifizierten Zeolith Y vermischt. Beide Mischungen werden anschließend zu einem Vlies gestreut, vorverdichtet und mittels einer Heißpresse auf die Solldichte von 650 kg/m³ verdichtet. Die anschließende Messung der Formaldehydabgabe nach EN 717-1 ergaben für die Platte ohne Zeolith einen Wert von 0,16 ppm und für die zeolithhaltige Platte ein Wert von 0,08 ppm. Die Querzugfestigkeit betrug bei der zeolithhaltigen Platte 0,68 N/mm², bei der zeolithfreien Platte 0,71 N/mm³. Die Standardabweichung beider Kenwerte lag im Bereich von 0,06 N/mm² pro Quadratmillimeter.

Neben der Anwendung als Platte kann das Holzwerkstoffprodukt auch in andere Formen gebracht werden, beispielsweise in Profile oder in eine Behälterform.

## Patentansprüche

1. Verfahren zum Herstellen von Holzwerkstoffprodukten aus lignocellulosehaltigen Partikeln und formaldehydhaltigen Klebstoffen,:
- die lignocellulosehaltigen Partikel werden mit einem Zeolith vermischt,
- der Mischung aus lignocellulosehaltigen Partikeln und Zeolith werden formaldehydhaltige Klebstoffe zugegeben und vermischt,
- nach dem Vermischen werden die lignocellulosehaltigen Partikel, der Zeolith und die formaldehydhaltigen Klebstoffe einem Formgebungsverfahren zugeführt, **dadurch gekennzeichnet, dass** dem Zeolith und/oder den lignocellulosehaltigen Partikeln Haftmittel, die von dem Klebstoff, mit dem die Matrix für das Holzwerkstoffprodukt erzeugt wird, verschieden sind, zur verbesserten Anhaftung des Zeoliths an den lignocellulosehaltigen Partikeln vor dem Vermischen der lignocellulosehaltigen Partikel und der formaldehydhaltigen Klebstoffe zugegeben werden.

2. Verfahren nach Anspruch 1, **dadurch gekennzeichnet, dass** ein Zeolithanteil bezogen auf die Trockenmasse der lignocellulosehaltigen Partikel zwischen 0,5 und 10-Massen %, vorzugsweise zwischen 2 und 6-Massen % zugegeben wird.

3. Verfahren nach Anspruch 1 oder 2, **dadurch gekennzeichnet, dass** nur eine Teilmenge der insgesamt eingesetzten lignocellulosehaltigen Partikel mit dem Zeolith vermischt wird und schichtweise oder bereichsweise vor dem Formgebungsverfahren in dem Gemisch mit lignocellulosehaltigen Partikeln und Klebstoff angeordnet wird.

4. Verfahren nach Anspruch 1, 2 oder 3, **dadurch gekennzeichnet, dass** als Haftmittel von den formaldehydhaltigen Klebstoffen verschiedene Klebstoffe und/oder Paraffine verwendet werden.

5. Verfahren nach einem der voranstehenden Ansprüche, **dadurch gekennzeichnet, dass** das Gemisch mit lignocellulosehaltigen Partikeln, Klebstoff, Haftmittel und Zeolith zur Aushärtung des Klebstoffes vor dem Formgebungsverfahren erwärmt wird.

6. Verfahren nach einem der voranstehenden Ansprüche, **dadurch gekennzeichnet, dass** der Zeolith als Pulver oder Suspension zugegeben wird.

7. Verfahren nach einem der voranstehenden Ansprüche, **dadurch gekennzeichnet, dass** als Zeolith Zeolith Beta, Clinoptilolith, Zeolith Y und/oder modifizierter Zeolith Y verwendet wird.

8. Verfahren nach einem der voranstehenden Ansprüche, **dadurch gekennzeichnet, dass** als Zeolith modifizierte, aktiv katalytisch wirkende Zeolithe des Typ Y verwendet werden, die Formaldehyd spalten oder dauerhaft binden.

9. Holzwerkstoffprodukt mit einem Gemisch aus lignocellulosehaltigen Partikeln und einem formaldehydhaltigen Klebstoff, wobei das Holzwerkstoffprodukt einen Zeolith enthält, **dadurch gekennzeichnet, dass** der Zeolith an den lignocellulosehaltigen Partikeln über ein Haftmittel, das von dem Klebstoff, mit dem die Matrix für das Holzwerkstoffprodukt erzeugt wird, verschieden ist, angebunden ist.

10. Holzwerkstoffprodukt nach Anspruch 9, **dadurch gekennzeichnet, dass** der Zeolithanteil zwischen 0,5 und 10-Massen % des Massenanteils der lignocellulosehaltigen Partikel an dem Holzwerkstoffprodukt beträgt.

11. Holzwerkstoffprodukt nach Anspruch 9 oder 10, **dadurch gekennzeichnet, dass** der Zeolith nur schichtweise oder bereichsweise in dem Holzwerkstoffprodukt angeordnet ist.

## Claims

1. A method for producing woodbase products from lignocellulosic particles and formaldehydic adhesives, wherein:
- the lignocellulosic particles are mixed together with a zeolite
- a formaldehydic adhesive is added to the mixture of lignocellulosic particles and zeolite and mixed
- after the mixing, the lignocellulosic particles, the zeolite and the formaldehydic adhesives are subjected to a shaping process,
**characterized in that** adhesion promoters, which are different from the adhesive used to produce the matrix for the woodbase product, are added to the zeolite and/or the lignocellulosic particles before the mixing of the lignocellulosic particles and the formaldehydic adhesive for improved adhesion of the zeolite to the lignocellulosic particles.

2. The method according to claim 1, **characterized in** the proportion of zeolite added is between 0.5% and 10% by mass and preferably between 2% and 6% by mass, based on the dry mass of lignocellulosic particles.

3. The method according to claim 1 or 2, **characterized in that** only a portion of all the lignocellulosic particles used is mixed with the zeolite and is arranged layerwise or regionwise in the mixture with lignocellulosic particles and adhesive before the shaping process.

4. The method according to claim 1, 2 or 3, **characterized in that** adhesives that are different from the formaldehydic adhesive and/or parrafins are used as adhesion promoters.

5. The method according to any preceding claim, **characterized in that** the mixture with lignocellulosic particles, adhesive, adhesion promotoer and zeolite is heated before the shaping process to cure the adhesive.

6. The method according to any preceding claim, **characterized in that** the zeolite is added as a powder or as a suspension.

7. The method according to any preceding claim, **characterized in that** the zeolite used is zeolite beta, clinoptilolith, zeolite Y and/or modified zeolite Y.

8. The method according to any preceding claim, **characterized in that** the zeolite used comprises modified, actively catalytically acting zeolites of type Y which scission or durably bind formaldehyde.

9. A woodbase product with a mixture of lignocellulosic particles and a formaldehydic adhesive, wherein the woodbase product contains a zeolite, **characterized in that** the zeolite is attached to the lignocellulosic particles via an adhesion promoter which is different from the adhesive used to produce the matrix for the woodbase product.

10. The woodbase product according to claim 9, **characterized in that** the zeolite content is between 0.5% and 10% by mass of the mass fraction of the woodbase product which is attributable to lignocellulosic particles.

11. The woodbase product according to any one of claims 9 or 10, **characterized in that** the zeolite forms a layerwise or regionwise arrangement in the woodbase product.

## Revendications

1. Procédé pour produire des produits en matériau à base de bois à partir de particules contenant de la lignocellulose et des colles contenant de la formaldéhyde, dans lequel :
- on mélange les particules contenant de la lignocellulose avec une zéolite,
- on ajoute des colles contenant de la formaldéhyde au mélange de particules contenant de la lignocellulose et de zéolite et on les mélange,
- après le mélange, les particules contenant de la lignocellulose, la zéolite et la colle contenant de la formaldéhyde sont soumis à un processus de mise en forme,
**caractérisé en ce que** l'on ajoute à la zéolite et/ou aux particules contenant de la lignocellulose des agents adhésifs, qui diffèrent de la colle avec laquelle la matrice pour le produit en matériau à base de bois est engendrée, pour une amélioration de l'adhésion de la zéolite contre les particules contenant de la lignocellulose, avant le mélange des particules contenant de la lignocellulose et de la colle contenant de la formaldéhyde.

2. Procédé selon la revendication 1, **caractérisé en ce que** l'on ajoute une proportion de zéolite, par référence à la masse sèche des particules contenant de la lignocellulose, entre 0,5 et 10 % en masse, de préférence entre 2 et 6 % en masse.

3. Procédé selon la revendication 1 ou 2, **caractérisé en ce que** l'on mélange uniquement une quantité partielle des particules contenant de la lignocellulose employée au total avec la zéolite, et **en ce qu'**on l'agence couche par couche ou par secteur avant le processus de mise en forme dans le mélange avec les particules contenant de la lignocellulose et de la colle.

4. Procédé selon la revendication 1, 2 ou 3, **caractérisé en ce que** l'on utilise à titre d'agents adhésifs des colles différentes des colles contenant de la formaldéhyde et/ou de la paraffine.

5. Procédé selon l'une des revendications précédentes, **caractérisé en ce que** le mélange avec les particules contenant de la lignocellulose, avec la colle, avec les agents adhésifs et avec la zéolite est réchauffé pour faire durcir la colle avant le processus de mise en forme.

6. Procédé selon l'une des revendications précédentes, **caractérisé en ce que** la zéolite est ajoutée sous forme de poudre ou de suspension.

7. Procédé selon l'une des revendications précédentes, **caractérisé en ce que** l'on utilise comme zéolite de la zéolite bêta, de la clinoptilolithe, de la zéolite Y et/ou de la zéolite Y modifiée.

8. Procédé selon l'une des revendications précédentes, **caractérisé en ce que** l'on utilise comme zéolite des zéolites modifiées actives sur le plan catalytique du type Y, qui scindent la formaldéhyde ou qui la lient de façon durable.

9. Produit en matériau à base de bois comprenant un mélange de particules contenant de la lignocellulose et une colle contenant de la formaldéhyde, dans lequel le produit en matériau à base de bois contient une zéolite, **caractérisé en ce que** la zéolite est liée aux particules contenant de la lignocellulose via un agent adhésif, qui est différent de la colle avec laquelle la matrice pour le produit en matériau à base de bois est engendrée.

10. Produit en matériau à base de bois selon la revendication 9, **caractérisé en ce que** la proportion de zéolite est entre 0,5 et 10 % en masse de la part en masse des particules contenant de la lignocellulose dans le produit en matériau à base de bois.

11. Produit en matériau à base de bois selon la revendication 9 ou 10, **caractérisé en ce que** la zéolite est agencée uniquement couche par couche ou par secteur dans le produit en matériau à base de bois.
